# EUROPÄISCHE PATENTSCHRIFT

(11) **EP 4 359 683 B1**
(45) Veröffentlichungstag und Bekanntmachung des Hinweises auf die Patenterteilung: **18.09.2024**
(21) Anmeldenummer: 23793888.1
(22) Anmeldetag: 24.10.2023
(51) Int. Cl.: F16D 55/226

(54) **ELEKTROMECHANISCHE BREMSVORRICHTUNG FÜR EIN KRAFTFAHRZEUG UND VERFAHREN ZUM BETRIEB EINER ELEKTROMECHANISCHEN BREMSVORRICHTUNG**
ELECTROMECHANICAL BRAKING DEVICE FOR A MOTOR VEHICLE AND METHOD OF OPERATING AN ELECTROMECHANICAL BRAKING DEVICE
DISPOSITIF DE FREINAGE ÉLECTROMÉCANIQUE POUR UN VÉHICULE AUTOMOBILE ET PROCÉDÉ DE FONCTIONNEMENT D'UN DISPOSITIF DE FREINAGE ÉLECTROMÉCANIQUE

(30) Priorität: 08.12.2022 BE 202205999
(43) Veröffentlichungstag der Anmeldung: 01.05.2024
(73) Patentinhaber: thyssenkrupp Presta AG, 9492 Eschen (LI); thyssenkrupp AG, 45143 Essen (DE)
(72) Erfinder: SZIMANDL, Barna, 9473 Gams (CH); PONGRATZ, Dennis, 6842 Koblach (AT); SLATINSKY, Jan, 9470 Buchs (CH)
(74) Vertreter: thyssenkrupp Intellectual Property GmbH
(86) Internationale Anmeldenummer: PCT/EP2023/079630
(87) Internationale Veröffentlichungsnummer: WO 2024/056915

(56) Entgegenhaltungen:
- WO-A1-2021/251709
- DE-A1- 19 711 851
- FR-A1- 2 757 918
- US-A- 5 219 047
- US-A1- 2013 299 288
- US-A1- 2021 301 889
- US-B2- 10 138 965

## Beschreibung

### Stand der Technik

Die Erfindung betrifft eine elektromechanische Bremsvorrichtung für ein Kraftfahrzeug, umfassend eine Stellvorrichtung und ein damit verbundenes Bremsteil, das von der Stellvorrichtung entlang einer Achse verstellbar und mit einem Gegenbremsteil in Bremseingriff bringbar ist, wobei die Stellvorrichtung einen ersten Stelltrieb und einen seriell damit gekoppelten zweiten Stelltrieb aufweist, wobei der erste Stelltrieb ein drehend antreibbares erstes Antriebsrad aufweist, und der zweite Stelltrieb ein drehend antreibbares, zu dem ersten Antriebsrad koaxiales zweites Antriebsrad aufweist, wobei zwischen dem ersten Antriebsrad und dem zweiten Antriebsrad eine Kupplungsvorrichtung angeordnet ist.

Eine derartige Bremsvorrichtung eines Kraftfahrzeugs ist als Reibungsbremse ausgebildet, bei dem ein am Fahrgestellt abgestütztes, relativ zur Drehung des zu bremsenden Rades feststehendes Bremsteil mittels einer Stellvorrichtung in Bremseingriff gebracht werden kann mit einem Gegenbremsteil, welches mit dem Rad rotiert. Im Bremseingriff wird ein Reibkontakt zwischen Bremsteil und Gegenbremsteil erzeugt, wobei das durch Reibung erzeugte Bremsmoment umso größer ist, je höher die von der Stellvorrichtung in der Verstellrichtung ausgeübte Verstellkraft ist.

Eine verbreitete Bauform sind die im Prinzip bekannten Scheibenbremsen, bei denen das Gegenbremsteil durch eine mit dem Rad rotierende Bremsscheibe gebildet wird, die von einem Bremssattel beidseitig axial umgriffen wird. Durch mindestens einen an dem Bremssattel axial abgestützten, bevorzugt linearen Stelltrieb kann ein Bremsteil, in der Regel ein Bremsbelag, in einer axialen Verstellrichtung verstellt und dadurch in Reibkontakt mit einer Axialseite der Bremsscheibe gebracht werden, wobei die Bremsscheibe zwischen dem verstellten Bremsteil und einem weiteren, axial gegenüberliegend an dem Bremssattel abgestützten Bremsteil im Bremseingriff reibschlüssig eingespannt wird.

Voraussetzung für eine einwandfreie Funktion und ein punktgenaues Ansprechen der Bremse ist, dass im unbetätigten Zustand zwischen dem Bremsteil und dem Gegenbremsteil in der Verstellrichtung ein definierter Abstand, der sogenannte Luftspalt bereitgestellt wird. Bei der Betätigung der Bremse wird das Bremsteil durch die Stellvorrichtung senkrecht zum Luftspalt auf das Gegenbremsteil zu bewegt, bis der Luftspalt überwunden und der Reibkontakt erreicht ist, so dass der Bremseingriff erzeugt ist.

Für ein reproduzierbares und punktgenaues Ansprechen der Bremse im Fahrbetrieb ist es maßgeblich, dass der Luftspalt im unbetätigten Zustand in der axialen Verstellrichtung gemessen eine definierte Spaltbreite hat. Die Spaltbreite kann sich im Laufe des Betriebs beispielsweise durch Abnutzung des Bremsbelags vergrößern, und muss entsprechend nachjustiert werden. Zur Justierung des Luftspalts ist es aus der DE 10 2017 123 266 A1 bekannt, dass die Stellvorrichtung zwei in Verstellrichtung seriell angeordnete Stelltriebe aufweist. Jeder der Stelltriebe weist ein antriebsseitiges Antriebselement und ein relativ dazu linear in der axialen Verstellrichtung verstellbares abtriebsseitiges Abtriebselement auf. Zur Realisierung einer Verstellbewegung weist jedes Antriebselement ein Antriebsrad auf, bevorzugt ein Getrieberad wie ein Zahnrad oder dergleichen, welches durch einen elektrischen Stellmotor um seine Achse drehend antreibbar ist. Die Drehung des Antriebsrads wird in dem Stelltrieb jeweils in eine relative Verstellbewegung bzw einen Stellhub des Abtriebselements relativ zum Antriebselement in der axialen Verstellrichtung umgesetzt. In dem gattungsgemäßen Stand der Technik sind die beiden Antriebsräder des ersten und zweiten Stelltriebs koaxial auf einer in der axialen Verstellrichtung liegenden gemeinsamen Achse angeordnet.

Ein Stelltrieb bildet jeweils eine in der Verstellrichtung axial wirksame Hub- oder Verstelleinrichtung. Beispielsweise kann ein Stelltrieb einen Spindeltrieb aufweisen, bei dem das Antriebselement eine Spindelmutter aufweist, und das Abtriebselement eine darin eingreifende Gewindespindel, oder umgekehrt. Es können auch andere Bauformen von Stelltrieben eingesetzt werden, die beispielsweise Rampenlager, Nocken- oder Kurvenscheiben, Kippstiftanordnungen oder dergleichen umfassen können, und ebenfalls eine Drehung des Antriebselements in eine lineare Verstellung des Abtriebselements umsetzen.

Dadurch, dass das Antriebselement des zweiten Stelltriebs mit dem Abtriebselement des ersten Stelltriebs gekoppelt ist, und das Bremselement am Abtriebselement des zweiten Stelltriebs angebracht ist, kann durch eine Betätigung des ersten Stelltriebs das Bremselement zusammen mit dem zweiten Stelltrieb linear verstellt werden, um den Bremseingriff zu erzeugen. Durch eine Verstellung des zweiten Stelltriebs unabhängig von der Betätigung des ersten Stelltriebs kann der Luftspalt justiert werden. Der erste Stelltrieb kann somit durchgehend im optimalen Arbeitsbereich betrieben werden.

Ein weiterer Vorteil der zwei gekoppelten Stelltriebe ist, dass eine redundante Auslegung möglich ist. So kann beispielsweise durch den im Normalbetrieb lediglich zur Justierung des Luftspalts eingesetzten zweite Stelltrieb grundsätzlich auch der Bremseingriff erzeugt werden.

Um eine im Normalbetrieb synchrone Rotation des ersten und zweiten Antriebselements zu ermöglichen, so dass der zweite Stelltrieb als Ganzes mitgeschleppt und nicht verstellt wird, ist in der genannten DE 10 2017 123 266 A1 vorgeschlagen worden, zwischen dem ersten und zweiten Antriebsrad eine Rastkupplung vorzusehen. Dadurch können die beiden Antriebsräder in separaten, lösbar formschlüssig einrastbaren Raststufen gekuppelt sein, so dass eine zuverlässige Drehmomentübertragung zur Synchronisation ermöglicht wird. Die vorgegebenen diskreten Raststufen müssen jedoch auch zur Einstellung des Luftspalts überwunden werden. Nachteilig daran ist, dass nur eine stufenweise Justierung des Luftspalts möglich ist, wodurch der Ausgleich der kontinuierlichen Abnutzung des Bremselements nicht befriedigend möglich ist. Außerdem ist zur Überwindung der Raststufen ein relativ hohes Antriebsmoment erforderlich.

Eine Bremsvorrichtung der eingangs genannten Art ist aus der US 2021/301889 A1 bekannt.

Angesichts der vorangehend erläuterten Problematik ist es eine Aufgabe der vorliegenden Erfindung, eine verbesserte Justierung des Luftspalts zu ermöglichen.

### Darstellung der Erfindung

Diese Aufgabe wird erfindungsgemäß gelöst durch die Bremsvorrichtung mit den Merkmalen des Anspruchs 1 und das Verfahren zur Betrieb der Bremsvorrichtung gemäß Anspruch 12. Vorteilhafte Weiterbildungen ergeben sich aus den Unteransprüchen.

Bei einer elektromechanischen Bremsvorrichtung für ein Kraftfahrzeug, umfassend eine Stellvorrichtung und ein damit verbundenes Bremsteil, das von der Stellvorrichtung entlang einer Achse verstellbar und mit einem Gegenbremsteil in Bremseingriff bringbar ist, wobei die Stellvorrichtung einen ersten Stelltrieb und einen seriell damit gekoppelten zweiten Stelltrieb aufweist, wobei der erste Stelltrieb ein drehend antreibbares erstes Antriebsrad aufweist, und der zweite Stelltrieb ein drehend antreibbares, zu dem ersten Antriebsrad koaxiales zweites Antriebsrad aufweist, wobei zwischen dem ersten Antriebsrad und dem zweiten Antriebsrad eine Kupplungsvorrichtung angeordnet ist, ist erfindungsgemäß vorgesehen, dass die Kupplungsvorrichtung als Reibkupplung ausgebildet ist mit einem Reibelement, welches mit dem einen der Antriebsräder drehmomentschlüssig verbunden ist, und das im Kupplungseingriff reibschlüssig mit einem Gegenreibelement verbindbar ist, welches mit dem jeweils anderen Antriebsrad drehmomentschlüssig verbunden ist.

Im Folgenden werden das erste und das zweite Antriebsrad zusammen auch als die beiden Antriebsräder oder kurz als die Antriebsräder bezeichnet.

Die Antriebsräder können als Zahnrad, beispielsweise als Stirnrad, oder aus als Riemen- oder Zahnriemenrad oder Schneckenrad ausgebildet sein, so dass generell ein Getrieberad zur Verfügung gestellt wird, über das ein Antriebsmoment von einem elektrischen Stellmotor in den Stelltrieb eingekoppelt werden kann.

Erfindungsgemäß ist zwischen den Antriebsrädern eine Reibkupplung realisiert. Diese umfasst ein Reibelement, welches mit dem einen der Antriebsräder drehmomentschlüssig verbunden ist, und ein damit korrespondierendes Gegenreibelement, welches mit dem jeweils anderen Antriebsrad drehmomentschlüssig verbunden ist. Das Reibelement kann mit dem Gegenreibelement in jeder beliebigen relativen Winkelstellung in reibschlüssigen Kupplungseingriff gebracht werden. Dabei wird eine rein kraftschlüssige Kupplung realisiert, im Unterschied zu der formschlüssigen Rastverbindung im Stand der Technik. Dadurch kann die relative Stellung der Antriebsräder zueinander kontinuierlich vorgegeben werden, im Gegensatz zu den diskreten Raststufen im Stand der Technik. Entsprechend ist eine gleichmäßige, kontinuierliche Verstellung des zweiten Stelltriebs relativ zum ersten Stelltreib ermöglicht, und es kann eine kontinuierliche Justierung des Luftspalts erfolgen. Dies ist besonders vorteilhaft im Hinblick auf eine gleichmäßige Nachführung des optimalen Arbeitspunkts der Bremsvorrichtung an die kontinuierliche Abnutzung des Bremsteils im Betrieb, d.h. dem kontinuierlichen Verschleiß des Bremsbelags. Verglichen mit der im Stand der Technik nur stufenweisen Justiermöglichkeit kann ein durchgehend verbessertes Ansprechverhalten der Bremsvorrichtung realisiert werden, und damit eine erhöhte Betriebssicherheit und ein höherer Bedienkomfort.

Ein weiterer Vorteil gegenüber einer im Stand der Technik beschriebenen Rastkupplung ist, dass zum Betätigen und Lösen der Kupplungsvorrichtung im Wesentlichen keine axiale Relativbewegung zwischen den im Kupplungseingriff stehenden Kupplungselementen erforderlich ist, beispielsweise zwischen den Antriebsrädern oder den Rastelementen, die zum Erzeugen und Lösen des rastbaren Formschlusses zwangsläufig zueinander bewegbar sein müssen. Dagegen kann der reine Kraftschluss zwischen dem erfindungsgemäßen Reib- und Gegenreibelement einfach durch die angelegte axiale Betätigungskraft vorgegeben werden, wobei Reib- und Gegenreibelement nicht axial relativ zueinander bewegt werden müssen. Dadurch wird eine einfachere und zuverlässigere konstruktive Gestaltung der Kupplungsvorrichtung ermöglicht.

Es ist bevorzugt vorgesehen, dass die Reibkupplung ein definiert vorgebbares Kupplungsmoment aufweist. Das Kupplungsmoment gibt das maximale Differenzmoment an, welches durch den Reibschluss im Kupplungseingriff kraftschlüssig zwischen Reibelement und Gegenreibelement übertragen werden kann. Beim Überschreiten des Kupplungsmoments rutscht die Kupplungsvorrichtung durch, so dass die beiden Antriebsräder relativ zueinander verdreht werden. Ein Vorteil dabei ist, dass die erfindungsgemäße Reibkupplung kontinuierlich gleitend durchrutscht, so dass eine verbesserte, gleichmäßige Nachjustierung des Luftspalts ermöglich wird. Darüber hinaus müssen keine axialen Ausweichbewegungen von Rastelementen wie bei der bekannten Rastkupplung konstruktiv berücksichtigt und abgefangen werden.

Es ist vorteilhaft, dass das Reibelement und das Gegenreibelement koaxial angeordnet sind. Dabei korrespondiert die koaxiale Anordnung mit der koaxialen Anordnung der Antriebsräder. Das Reibelement und das Gegenreibelement können konstruktiv einfach und in einer kompakten Bauform im Bereich der axial gegeneinander gerichteten Stirnseiten der Antriebsräder angeordnet sein. Durch die vorangehend beschriebene Erzeugung des reinen Kraftschlusses der Kupplung sind keinerlei bewegliche Teile wie bei der Rastkupplung im Stand der Technik erforderlich.

In einer vorteilhaften Ausführung kann vorgesehen sein, dass das Reibelement und das Gegenreibelement konisch ausgebildet sind. Das Reibelement kann dabei einen zumindest abschnittweise in der axialen Verstellrichtung zusammenlaufenden Kegelabschnitt mit einer konischen Reibfläche aufweisen, der als Außenkonus oder Innenkonus ausgebildet sein kann, und der mit einem korrespondierenden Kegelabschnitt am Gegenreibelement, der entsprechend gegensinnig als Innenkonus oder Außenkonus ausgestaltet ist und eine konische Gegenreibfläche aufweist. Zur Erzeugung des Kupplungseingriffs taucht der Außenkonus in den Innenkonus ein, wobei die konischen Reib- und Gegenreibflächen durch eine axiale Betätigungskraft der Kupplung reibschlüssig gegeneinander belastet werden. Ein Vorteil dabei ist, dass durch den Konus eine Kraftübersetzung der axial einwirkenden Betätigungskraft der Kupplung in die zwischen den konischen Reibflächen im Reibkontakt wirkende Normalkraft erfolgen kann. So kann durch eine flachere Steigung eine relativ kleine axiale Betätigungskraft in eine größere Normalkraft im Reibkontakt umgesetzt werden, wodurch bereits durch eine relativ kleine axiale Betätigungskraft der Kupplung ein hohes Kupplungsmoment realisierbar ist.

Alternativ oder zusätzlich zu der vorgenannten Ausführung kann vorgesehen sein, dass das Reibelement und das Gegenreibelement planar ausgebildet sind. Dabei sind die miteinander korrespondierenden Reibflächen zumindest abschnittweise als plane Axialflächen ausgebildet, ähnlich einer Scheibenkupplung. Es wird eine bauraumsparende Anordnung ermöglicht, insbesondere wenn nur ein relativ kleines Kupplungsmoment realisiert werden soll.

Es kann bevorzugt vorgesehen sein, dass das Reibelement und das Gegenreibelement gegeneinander vorgespannt sind. Bevorzugt sind das Reibelement und das Gegenreibelement elastisch bzw. federnd gegeneinander vorgespannt. Dabei werden die Reib- und Gegenreibflächen mit einer vorgegebenen axialen Vorspannkraft im Reibschluss gegeneinander angepresst. Zur Erzeugung der Vorspannkraft kann bevorzugt ein elastisches Vorspannelement vorgesehen sein, beispielsweise ein Federelement oder dergleichen. Das Kupplungsmoment der Reibkupplung wird durch die senkrecht zum Reibkontakt wirkende Betätigungskraft bestimmt, also die axial zwischen Reib- und Gegenreibelement aufgebrachte Kraft, wobei das Kupplungsmoment umso größer ist, je größer die Vorspannkraft ist. Dies eröffnet die vorteilhafte Möglichkeit, das Kupplungsmoment einfach durch die durch das Vorspannelement ausgeübte Vorspannkraft vorzugeben. Beispielsweise kann bei einem in axialer Richtung druckelastischen Federelement, wie einer Druckfeder, die ausgeübte Vorspannkraft einfach durch der Federkonstante und die Kompression der Feder vorgegeben und angepasst werden.

Die vorgenannte Ausführungsform kann in vorteilhafter Weise dadurch realisiert sein, dass das Reibelement und/oder das Gegenreibelement axial verlagerbar und über ein axial wirksames Federelement gegen das erste Antriebsrad oder das zweite Antriebsrad abgestützt ist. Das Reibelement oder das Gegenreibelement sind dabei drehmomentschlüssig, und axial verlagerbar mit dem einen Antriebsrad verbunden, beispielsweise über radial vorstehende, einen in Umfangsrichtung wirksamen Formschluss erzeugende Mitnehmer. Das zwischen dem Reibelement oder dem Gegenreibelement und dem einen Antriebsrad axial eingespannte Federelement, welches bevorzugt als axial wirksame Druckfeder ausgebildet ist, sorgt dafür, dass das Reib- oder Gegenreibelement axial gegen das korrespondierende, an dem anderen Antriebsrad axial abgestützte Gegenreib- oder Reibelement vorgespannt, d.h. axial im Reibkontakt dagegen angepresst wird. Das korrespondierende Gegenreib- oder Reibelement ist drehschlüssig mit dem jeweils anderen Antriebsrad verbunden. Es ist auch möglich, dass alternativ oder zusätzlich das Gegenreibelement über ein Federelement an einem der Antriebsräder abgestützt ist. Ein Vorteil dieser Anordnung ist, dass die erfindungsgemäße Reibkupplung konstruktiv einfach und bauraumsparend zwischen den Antriebsrädern eingegliedert werden kann.

In einer vorteilhaften Weiterbildung ist es möglich, dass das Reibelement und/oder das Gegenreibelement in dem ersten Antriebsrad oder dem zweiten Antriebsrad angeordnet ist. So ist es beispielsweise möglich, das eine Antriebsrad im Wesentlichen trommelförmig zu gestalten, so dass in einem von dem umlaufenden Zahnrad oder Zahnkranz umschlossenen Innenraum das Reib- oder Gegenreibelement angeordnet sein kann. Dadurch wird eine kompakte, gegen äu-ßere Einflüsse geschützte Bauform ermöglicht. So kann beispielsweise das Antriebsrad des ersten Stelltriebs ein konisches Reibelement aufweisen, welches axial in ein als Innenkonus ausgebildetes Gegenreibelement eingreift, das zumindest teilweise innerhalb des zweiten Antriebsrads angeordnet ist.

Eine besonders kompakte Bauform kann - insbesondere bei der zuletzt genannten Ausführung - dadurch realisiert sein, dass die Antriebsräder innerhalb der axialen Erstreckung der Stelltriebe angeordnet sind, also nicht einseitig axial vorstehend angebracht sind.

Es ist bevorzugt, dass das Reibelement und/oder das Gegenreibelement einen Reibbelag aufweisen. Das Reib- und Gegenreibelement weisen bevorzugt einen metallischen Grundkörper auf, beispielsweise aus Stahl. Zur Vermeidung von Metall-Metall-Kontakt kann bevorzugt eine Beschichtung oder ein Belag zur Erzeugung einer Reibpaarung mit einer definierten Reibkraft aufgebracht sein, beispielsweise aus Sinter-, Metall- und/oder Keramikreibwerkstoffen, Verbundwerkstoffen oder dergleichen. Dadurch kann ein definiertes, reproduzierbares Kupplungsmoment gewährleistet werden.

Es kann vorgesehen sein, dass ein Stelltrieb einen Spindeltrieb aufweist. Dabei greift in an sich bekannter Weise eine Gewindespindel in eine Spindelmutter ein, und ein relativer drehender Antrieb über ein mit der Gewindespindel oder der Spindelmutter verbundenes Antriebsrad. Es ist möglich, dass die Spindelmutter das antriebsseitige Antriebselement des Stelltriebs bildet, und die Gewindespindel das relativ dazu linear verstellbare, ausgangsseitige Abtriebselement, oder umgekehrt.

Es ist möglich, dass ein Stelltrieb eine Kugelrampenanordnung, Keilscheibenanordnung, oder eine Kippstiftanordnung aufweist. Bei einer Kugelrampenanordnung, auch als Rampenlager bezeichnet, weisen das Antriebs- und Abtriebselement bevorzugt Kurvenscheiben mit gegen die Achse geneigten Laufbahnen oder Rampen auf, zwischen denen in Umfangsrichtung abwälzbare Kugeln angeordnet sind. Eine relative Drehung führt durch die dabei auf den Rampen abrollenden Kugel dazu, dass das Abtriebselement relativ zum Antriebselement axial verlagert wird. Bei einer an sich bekannten Kippstiftanordnung sind Kippstifte derart zwischen Antriebs-und Abtriebselement angeordnet und jeweils in Umfangsrichtung abgestützt, dass sie bei einer relative Drehung je nach Drehrichtung stärker oder schwächer gegen die Achse geneigt sind, wodurch der Abstand zwischen Antriebs- und Abtriebselement ebenfalls verstellbar ist.

In der Stellvorrichtung können zwei gleichartig wirkende Stelltriebe als erste und zweite Stelltriebe miteinander kombiniert sein, beispielsweise zwei Spindeltriebe. Es ist auch möglich, zwei unterschiedliche Bauarten miteinander zu kombinieren, beispielsweise eine Kugelrampenanordnung als ersten Stelltrieb, und einen Spindeltrieb als zweiten Stelltrieb zur Justierung des Luftspalts. Dabei können die jeweiligen charakteristischen Eigenschaften jeder Bauform optimal ausgenutzt werden. Beispielsweise kann mit einer Kugelrampenanordnung mit geringem Aufwand eine nichtlineare Verstellcharakteristik realisiert werden, und/oder zumindest abschnittweise selbsthemmende Eigenschaften, und/oder eine definierte Totpunkt- oder Strecklage, die einen definierten Verstellweg ermöglicht. Die Realisierung der genannten positiven Eigenschaften kann zumindest teilweise eine präzise Vorgabe des Luftspalts erfordern, was mit der Rastkupplung im Stand der Technik nicht möglich ist, mittels der erfindungsgemäßen Reibkupplung jedoch problemlos realisiert werden kann.

Bei einem Verfahren zum Betrieb einer elektromechanischen Bremsvorrichtung, die eine Stellvorrichtung umfassend einen ersten Stelltrieb und einen seriell damit gekoppelten Stelltrieb aufweist, und welche auf ein Bremsteil wirkt, das in Richtung einer Achse mit einem Gegenbremsteil in Bremseingriff bringbar ist, wobei der erste Stelltrieb ein drehend antreibbares erstes Antriebsrad aufweist, auf das zur Betätigung ein erstes Antriebsmoment aufgebracht werden kann, und der zweite Stelltrieb ein drehend antreibbares, zu dem ersten Antriebsrad koaxiales zweites Antriebsrad aufweist, auf das zur Betätigung ein zweites Antriebsmoment aufgebracht werden kann, wobei zwischen dem ersten Antriebsrad und dem zweiten Antriebsrad eine Kupplungsvorrichtung angeordnet ist, ist erfindungsgemäß vorgesehen, dass die Kupplungsvorrichtung als Reibkupplung ausgebildet ist, die ein Reibelement umfasst, welches mit dem einen der Antriebsräder drehmomentschlüssig verbunden ist, und ein damit korrespondierendes Gegenreibelement, welches mit dem jeweils anderen Antriebsrad drehmomentschlüssig verbunden ist, wobei die Reibkupplung ein vorgebbares Kupplungsmoment aufweist, bei dessen Überschreiten das erste Antriebsrad relativ zum zweiten Antriebsrad gleitend durchrutscht, wobei zur Betätigung des ersten Stelltriebs das erste Antriebsrad und das zweite Antriebsrad synchron angetrieben werden, so dass der zweite Stelltrieb unbetätigt bleibt, und zur Betätigung des zweiten Stelltriebs das zweite Antriebsrad angetrieben wird, und das erste Antriebsrad relativ dazu stillgesetzt wird, so dass die Reibkupplung durchrutscht und er erste Stelltrieb unbetätigt bleibt.

Zur Verstellung des ersten Stelltriebs kann mittels eines ersten elektrischen Stellmotors ein Stellmoment in das erste Antriebsrad eingekoppelt werden, und entsprechend kann der zweite Stelltrieb durch einen zweiten elektrischen Stellmotor angetrieben werden.

Im normalen Bremsbetrieb werden das erste und das zweite Antriebsrad synchron rotiert. Dies kann zum einen dadurch erfolgen, dass das erste und zweite Antriebsrad von den ersten und zweiten Stellmotoren mit synchronisierten Antriebsmomenten angetrieben werden. Zum anderen kann das zweite Antriebsrad beim Antrieb des ersten Antriebsrads durch die Kupplungsvorrichtung synchron mitgenommen werden, solange das übertragene Antriebsmoment unterhalb des Kupplungsmoments bleibt. In diesem Betriebsmodus bleibt der zweite Stelltrieb unbetätigt, und dreht als Ganzes zusammen mit dem Bremselement leer mit.

Bei erfindungsgemäßen Verfahren kann die Kupplungsvorrichtung beim Überschreiten des Kupplungsmoments zur Justierung des Luftspalts im Gegensatz zum Stand der Technik kontinuierlich und gleichmäßig gleitend durchrutschen. Dies kann beispielsweise dadurch realisiert werden, dass das Antriebsrad des ersten Stelltriebs festgesetzt wird, beispielsweise durch eine Bremse oder eine entsprechende Ansteuerung des ersten Antriebsmotors, während durch den zweiten Antriebsmotor ein zweites Antriebsmoment auf das zweite Antriebsrad aufgebracht wird, welches größer ist als das Kupplungsmoment. Dadurch wird das zweite Antriebsrad relativ zum ersten Antriebsrad verdreht, und durch Betätigung des zweiten Stelltriebs kann der Luftspalt kontinuierlich und feinfühlig justiert werden, so dass eine kontinuierlich fortschreitende Abnutzung des Bremselements bzw. des Bremsbelags optimal ausgeglichen werden kann.

Es ist möglich, dass das erste Antriebsrad und das zweite Antriebsrad zur Erzeugung eines synchronen Antriebs durch die Reibkupplung drehmomentschlüssig gekuppelt werden.

Dabei ist im kein synchroner Antrieb der beiden Antriebsräder durch die Stellmotoren erforderlich. Eventuelle Drehmomentdifferenzen können innerhalb vorgegebener Toleranzen ausgeglichen werden.

Es kann mit Vorteil vorgesehen sein, dass bei der Betätigung des ersten Stelltriebs ein höheres Kupplungsmoment vorgegeben wird, als bei der Betätigung des zweiten Stelltriebs. Der erste Stelltrieb wird durch synchronen Antrieb des ersten und des zweiten Antriebsrads betätigt. Das Reibelement und das Gegenreibelement werden durch die Federkraft des Federelements gegeneinander vorgespannt, und zusätzlich wirkt entgegengesetzt zur Federkraft die Verstellkraft des ersten Stelltriebs. Dadurch wird ein relativ hohes Kupplungsmoment realisiert. Wird hingegen zur Justierung des Luftspalts nur das zweite Antriebsrad gedreht, so wirkt allein die Federkraft, so dass ein niedrigeres Kupplungsmoment eingestellt wird. Dadurch wird die Justierung des Luftspalts erleichtert.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Bremsvorrichtung in einer schematischen perspektivischen Ansicht,
- Figur 2: eine seitliche Ansicht der Bremsvorrichtung gemäß Figur 1,
- Figur 3: die erfindungsgemäße Stellvorrichtung der Bremsvorrichtung gemäß Figur 1 freigestellt in einer schematischen perspektivischen Ansicht,
- Figur 4: einen Schnitt Q-Q durch die Bremsvorrichtung gemäß Figur 1,
- Figur 5: den ersten Stelltrieb der Bremsvorrichtung gemäß Figur 1 freigestellt in einer schematischen perspektivischen Darstellung,
- Figur 6: eine vergrößerte Detailansicht der Stellvorrichtung aus Figur 4,
- Figur 7: eine erfindungsgemäße Stellvorrichtung in einer zweiten Ausführungsform in einer Detailansicht wie in Figur 4.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

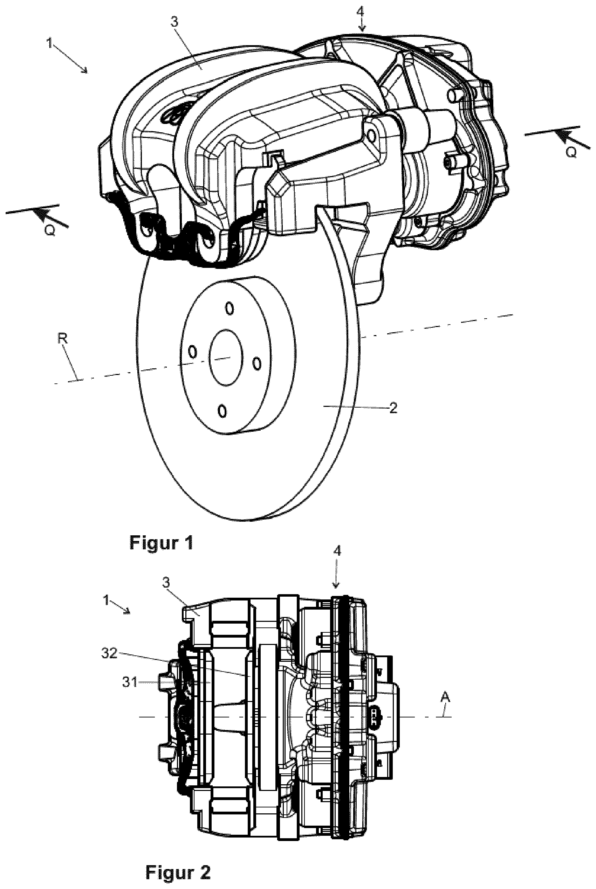

Fig. 1 zeigt eine erfindungsgemäße Bremsvorrichtung als Ganzes, die als Scheibenbremse ausgebildet ist. Diese umfasst eine Bremsscheibe 2, die ein Gegenbremsteil im Sinne der Erfindung bildet und mit einem hier nicht dargestellten, um eine Radachse R rotierbaren Fahrzeugrad verbunden ist. Ein Bremssattel 3 umgreift die beiden axialen Stirnflächen der Bremsscheibe 2.

Die Bremsscheibe 2 ist hier als unbelüftete Bremscheibe aus Vollmaterial ausgebildet. Alternativ kann diese auch als innenbelüftete Bremsscheibe ausgebildet sein.

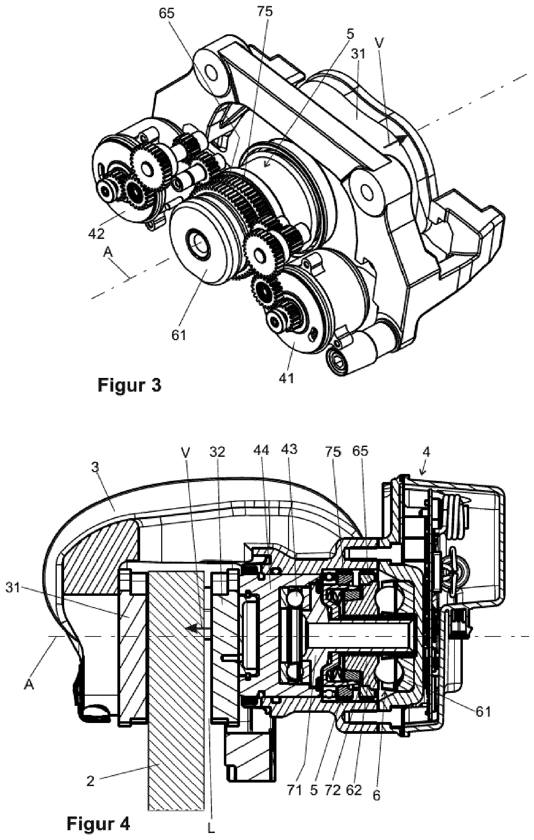

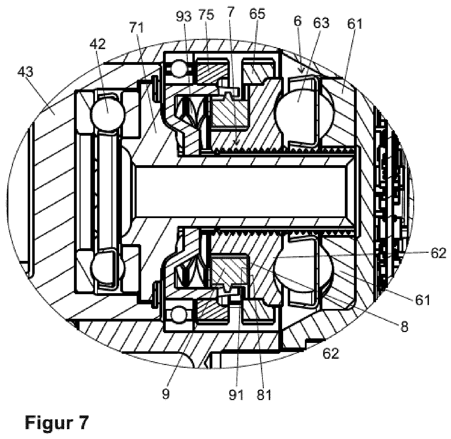

An dem Bremssattel 3 ist ein erfindungsgemäßer elektrischer Bremsaktuator 4 angebracht, die in Figur 3 in einer separaten, freigestellten schematischen perspektivischen Ansicht gezeigt ist, und in den Figuren 4 bis 7 im Detail erläutert wird.

Der Bremsaktuator 4 umfasst eine Stellvorrichtung 5 die sich axial in Richtung einer Achse A erstreckt, welche parallel zur Radachse R liegt und die Verstellrichtung V der Stellvorrichtung 5 angibt.

Wie in der Schnittdarstellung von Figur 4 längs der Achse A erkennbar ist, ist die Bremsscheibe 2 axial zwischen zwei Bremsbelägen 31 und 32 angeordnet. Der eine Bremsbelag 31 ist auf der dem Bremsaktuator 4 abgewandten Seite fest an dem Bremssattel 3 abgestützt. Der andere Bremsbelag 32, der ein Bremsteil im Sinne der Erfindung bildet, ist an der Stellvorrichtung 5 angebracht und von dieser in der durch die Achse A gegebenen, axialen Verstellrichtung V zur Erzeugung des Bremseingriffs auf die Bremsscheibe 2 zu verstellbar, wie in Figur 4 mit dem Pfeil angedeutet ist.

Im unbetätigten Zustand der Bremsvorrichtung 1 befindet sich zwischen der Bremsscheibe 2 und dem verstellbaren Bremsbelag 32 ein axialer Luftspalt L, der in Figur 4 schematisch übertrieben breit eingezeichnet ist.

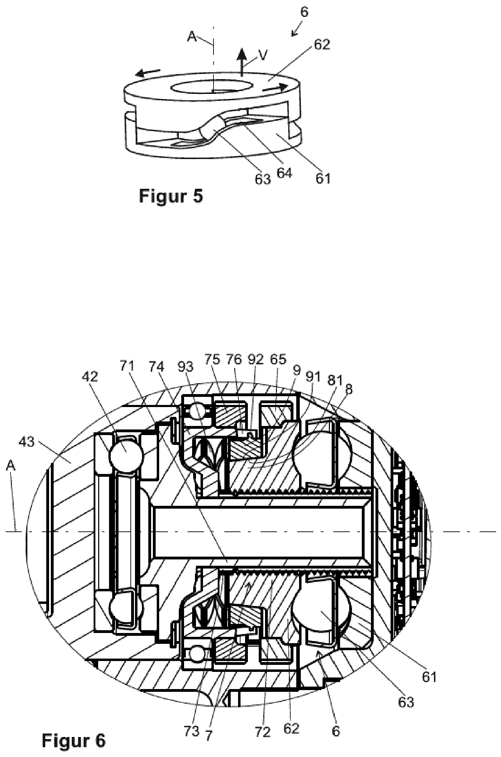

Der Aufbau der Stellvorrichtung 5 ist in Figur 4 und in dem vergrößerten Ausschnitt daraus in Figur 6 dargestellt.

Die Stellvorrichtung 5 umfasst einen ersten Stelltrieb 6, der ein Rampenlager aufweist, und einen damit axial (bezüglich der Achse A) seriell gekoppelten zweiten Stelltrieb 7, der einen Spindeltrieb aufweist.

Der erste Stelltrieb 6, der im gezeigten Beispiel als Rampenlager ausgebildet ist, umfasst eine axial und drehfest an dem Bremsaktuator 4 abgestützte, antriebseitige Kurvenscheibe 61 und eine abtriebsseitige Kurvenscheibe 62. Zwischen den Kurvenscheiben 61 und 62 sind Kugeln 63 angeordnet. Wie in der schematisch freigestellten Ansicht von Figur 5 erkennbar ist, weisen die Kurvenscheiben 61 und 62 einander axial gegenüberliegende rampenartige, schräg zur Achse A liegende Laufbahnen 64 auf, zwischen denen Kugeln 63 abwälzbar sind. Eine Drehung der abtriebsseitigen Kurvenscheibe 62, in Figur 5 oben, relativ zu der feststehenden antriebsseitigen Kurvenscheibe 61 - wie schematisch mit den gebogenen Pfeilen angedeutet - führt zu einer linearen Verstellung der abtriebsseitigen Kurvenscheibe 62 in der Verstellrichtung V parallel zur Achse A. Dadurch kann der Bremsbelag 32 wie in Figur 4 eingezeichnet durch Betätigung des ersten Stelltriebs 6 in Bremseingriff gebracht werden.

Die Kurvenscheibe 62 ist mit einem koaxialen Zahnrad 65 verbunden, welches als Stirnrad ausgebildet ist und ein Antriebsrad im Sinne der Erfindung bildet.

Das Zahnrad 65 steht im Getriebeeingriff mit einem ersten elektrischen Stellmotor 41. Dieser ermöglicht den drehenden Antrieb der Kurvenscheibe 62 und damit eine Betätigung des ersten Stelltriebs 6.

Der zweite Stelltrieb 7, der im gezeigten Beispiel als Spindeltrieb ausgebildet ist, weist abtriebsseitig eine Gewindespindel 71 auf, die in das Innengewinde einer antriebsseitigen Spindelmutter 72 eingreift. Dieses Innengewinde ist in der abtriebsseitigen Kurvenscheibe 62 des ersten Stelltriebs 6 ausgebildet, so dass das die Funktionen der abtriebsseitigen Kurvenscheibe 62 und der antriebsseitigen Spindelmutter 72 in einem Bauelement vereinigt sind.

Die Gewindespindel 71 ist über ein Nabenteil 74 mit einem koaxialen Zahnrad 75 verbunden, welches axial fixiert in dem Bremsaktuator 4 drehbar gelagert ist. Über Mitnehmer 73, die beispielsweise radial vorstehende Vorsprünge oder Zähne aufweisen können, die in axiale Schlitze des Nabenteils 74 axial verschieblich eingreifen, ist die Gewindespindel drehmomentschlüssig, aber axial verlagerbar mit dem Zahnrad 75 gekuppelt.

Das Zahnrad 75 kann wie das Zahnrad 65 als Stirnrad ausgeführt sein und ist zu diesem benachbart koaxial angeordnet. Dieses Zahnrad 75 steht im Getriebeeingriff mit einem zweiten elektrischen Stellmotor 42. Dieser ermöglicht den drehenden Antrieb der Gewindespindel 71 und damit eine Betätigung des zweiten Stelltriebs 7.

Die Gewindespindel 71 ist über ein Drucklager 43, beispielsweise wie dargestellt ein Axialwälzlager, axial mit einem Druckstück 44 verbunden, an dem der verlagerbare Bremsbelag 32 angebracht ist, wie in Figur 4 erkennbar ist. Das Druckstück 44 kann auch als Kolben bezeichnet werden.

Die erfindungsgemäße Kupplungsvorrichtung weist ein Reibelement 8 auf, welches als koaxialer, konischer Ansatz von der Kurvenscheibe 62 auf den zweiten Stelltrieb 7 zu gerichtet ist. Der konische Ansatz weist eine außen auf einem Außenkonus angeordnete konische Reibfläche 81 auf. Das Reibelement 81 kann bevorzugt einstückig mit der Kurvenscheibe 62 / Spindelmutter 72 ausgebildet sein.

Das Reibelement 8 ist im Kupplungseingriff reibschlüssig mit einem Gegenreibelement 9 gekuppelt. Dabei taucht der konische Ansatz axial in eine korrespondierende konische Öffnung des Gegenreibelements 9 ein, welche eine in einem Innenkonus angeordnete konische Reibfläche 91 aufweist. Im Kupplungseingriff liegen die Reibfläche 81 und die Gegenreibfläche 91 reibschlüssig gegeneinander an, wie in Figur 6 deutlich erkennbar ist.

Das Gegenreibelement 9 ist über Mitnehmer 92, die in korrespondierende Schlitze 76 in dem Nabenteil 74 oder dem Zahnrad 75 axial verschiebbar eingreifen, drehmomentschlüssig, aber axial verlagerbar mit dem Zahnrad 75 gekuppelt.

Zwischen dem Zahnrad 75 oder dem damit verbundenen Nabenteil 74 und dem Gegenreibelement 9 ist ein Federelement 93 angeordnet. Durch dessen axial wirksame Federkraft wird das Gegenreibelement 9 gegen das Reibelement 8 elastisch verspannt. Dadurch wird ein definiertes Kupplungsmoment der durch das Reibelement 8 und das Gegenreibelement 9 gebildeten erfindungsgemäßen Reibkupplung erzeugt.

Die in derselben Ansicht wie in Figur 6 gezeigte zweite Ausführungsform unterscheidet sich durch die Ausbildung und Anordnung der Reibfläche 81 und der Gegenreibfläche 91, die beide als plane Axialflächen ausgebildet sind, im Unterschied zu den konischen Flächen der ersten Ausführung gemäß der in den Figuren 4 und 6 gezeigten ersten Ausführungsform. Die Funktionsweise ist im Prinzip identisch, und daher werden auch dieselben Bezugszeichen verwendet.

Zur Betätigung der Bremsvorrichtung 1 werden die Zahnräder 65 und 75 synchron rotiert, so dass der erste Stelltrieb 6 einen Arbeitshub in Verstellrichtung V ausführt, so dass der Bremsbelag 32 den Luftspalt L passiert und in Bremseingriff mit der Bremsscheibe 2 kommt. Der synchrone Antrieb der Zahnräder 65 und 75 kann durch eine Synchronisierung der Antriebsgeschwindigkeiten der Stellmotoren 41 und 42 bewerkstelligt werden, oder durch den Antrieb durch nur einen der Stellmotoren 41 oder 42, während der jeweils andere Stellmotor 42 oder 41 leer mitläuft. Dann sorgt der reibschlüssige Kupplungseingriff zwischen dem Reibelement 8 und dem Gegenreibelement 9 für eine synchrone Drehung der Zahnräder 65 und 75.

Zur Justierung der Breite des Luftspalts L wird das Zahnrad 65 festgesetzt oder blockiert, beispielsweise durch eine entsprechende Ansteuerung des ersten Stellmotors 41. Durch den zweiten Stellmotor 42 wird das Zahnrad 75 relativ zum Zahnrad 65 verdreht, wobei die Reibkupplung kontinuierlich gleitend durchrutscht. Entsprechend wird der zweite Stelltrieb 7 gleichmäßig verstellt, wodurch die Breite des Luftspalts L ebenfalls kontinuierlich eingestellt und angepasst werden kann, um beispielsweise Abnutzung des Bremsbelags 32 zu kompensieren.

Dadurch, dass das Reibelement 8 und das Gegenreibelement 9 ganz oder zumindest teilweise innerhalb der Zahnräder 65 und 75 angeordnet sind, kann eine besonders kompakte Bauweise realisiert werden.

Die in den Figuren 1 bis 7 dargestellten Bremsvorrichtungen sind als Schwimmsattelbremse, auch als Faustsattelbremse bezeichnet, ausgebildet. Dabei wird der Bremsbelag 32 durch das Druckstück 44, und der Bremsbelag 31 durch den gegenüber der Bremsscheibe 2 in Richtung der Achse A verschiebbaren Bremssattel 3 an die Bremsscheibe 2 gedrückt. Alternativ kann die erfindungsgemäße Lösung auch bei einer Festsattelbremse zum Einsatz kommen.

### Bezugszeichenliste

- 1: Bremsvorrichtung
- 2: Bremsscheibe
- 3: Bremssattel
- 31, 32: Bremsbelag
- 4: Bremsaktuator
- 41, 42: Stellmotor
- 43: Drucklager
- 44: Druckstück
- 5: Stellvorrichtung
- 6: erster Stelltrieb
- 61: Kurvenscheibe
- 62: Kurvenscheibe (integriert mit Spindelmutter 72)
- 63: Kugel
- 64: Laufbahn
- 65: Zahnrad
- 7: zweiter Stelltrieb
- 71: Gewindespindel
- 72: Spindelmutter (integriert mit Kurvenscheibe 62)
- 73: Mitnehmer
- 74: Nabenteil
- 75: Zahnrad
- 76: Schlitz
- 8: Reibelement
- 81: Reibfläche
- 9: Gegenreibelement
- 91: Gegenreibfläche
- 92: Mitnehmer
- 93: Federelement

- A: Achse
- R: Radachse
- V: Verstellrichtung
- L: Luftspalt

## Patentansprüche

1. Elektromechanische Bremsvorrichtung (1) für ein Kraftfahrzeug, umfassend eine Stellvorrichtung (5) und ein damit verbundenes Bremsteil (32), das von der Stellvorrichtung (5) entlang einer Achse (A) verstellbar und mit einem Gegenbremsteil (2) in Bremseingriff bringbar ist,
wobei die Stellvorrichtung (5) einen ersten Stelltrieb (6) und einen seriell damit gekoppelten zweiten Stelltrieb (7) aufweist,
wobei der erste Stelltrieb (6) ein drehend antreibbares erstes Antriebsrad (65) aufweist, und der zweite Stelltrieb (7) ein drehend antreibbares, zu dem ersten Antriebsrad koaxiales zweites Antriebsrad (75) aufweist,
wobei zwischen dem ersten Antriebsrad (65) und dem zweiten Antriebsrad (75) eine Kupplungsvorrichtung (8, 9) angeordnet ist,
**dadurch gekennzeichnet,**
**dass** die Kupplungsvorrichtung als Reibkupplung (8, 9) ausgebildet ist mit einem Reibelement (8), welches mit dem einen der Antriebsräder (65) drehmomentschlüssig verbunden ist, und das im Kupplungseingriff reibschlüssig mit einem Gegenreibelement (9) verbindbar ist, welches mit dem jeweils anderen Antriebsrad (75) drehmomentschlüssig verbunden ist.

2. Bremsvorrichtung nach Anspruch 1, **dadurch gekennzeichnet, dass** die Reibkupplung (8, 9) ein definiert vorgebbares Kupplungsmoment aufweist.

3. Bremsvorrichtung nach einem der vorangehenden Ansprüche, **dadurch gekennzeichnet, dass** das Reibelement (8) und das Gegenreibelement (9) koaxial angeordnet sind.

4. Bremsvorrichtung nach einem der vorangehenden Ansprüche, **dadurch gekennzeichnet, dass** das Reibelement (8) und das Gegenreibelement (9) konisch ausgebildet sind.

5. Bremsvorrichtung nach einem der vorangehenden Ansprüche, **dadurch gekennzeichnet, dass** das Reibelement (8) und das Gegenreibelement (9) planar ausgebildet sind.

6. Bremsvorrichtung nach einem der vorangehenden Ansprüche, **dadurch gekennzeichnet, dass** das Reibelement (8) und das Gegenreibelement (9) gegeneinander vorgespannt sind.

7. Bremsvorrichtung nach Anspruch 6, **dadurch gekennzeichnet, dass** das Reibelement (8) und/oder das Gegenreibelement (9) axial verlagerbar und über ein axial wirksames Federelement (93) gegen das erste Antriebsrad (65) oder das zweite Antriebsrad (75) abgestützt ist.

8. Bremsvorrichtung nach Anspruch 6 oder 7, **dadurch gekennzeichnet, dass** das Reibelement (8) und/oder das Gegenreibelement (9) in dem ersten Antriebsrad (65) oder dem zweiten Antriebsrad (75) angeordnet ist.

9. Bremsvorrichtung nach einem der vorangehenden Ansprüche, **dadurch gekennzeichnet, dass** das Reibelement (8) und/oder das Gegenreibelement (9) einen Reibbelag aufweisen.

10. Bremsvorrichtung nach einem der vorangehenden Ansprüche, **dadurch gekennzeichnet, dass** ein Stelltrieb (7) einen Spindeltrieb aufweist.

11. Bremsvorrichtung nach einem der vorangehenden Ansprüche, **dadurch gekennzeichnet, dass** ein Stelltrieb (6) eine Keilscheibenanordnung, Kugelrampenanordnung oder eine Kippstiftanordnung aufweist.

12. Verfahren zum Betrieb einer elektromechanischen Bremsvorrichtung, die eine Stellvorrichtung (5) umfassend einen ersten Stelltrieb (6) und einen seriell damit gekoppelten zweiten Stelltrieb (7) aufweist, und welche auf ein Bremsteil (32) wirkt, das in Richtung einer Achse (A) mit einem Gegenbremsteil (2) in Bremseingriff bringbar ist,
wobei der erste Stelltrieb (6) ein drehend antreibbares erstes Antriebsrad (65) aufweist,
auf das zur Betätigung ein erstes Antriebsmoment aufgebracht werden kann, und der
zweite Stelltrieb (7) ein drehend antreibbares, zu dem ersten Antriebsrad koaxiales zweites Antriebsrad (75) aufweist, auf das zur Betätigung ein zweites Antriebsmoment aufgebracht werden kann,
wobei zwischen dem ersten Antriebsrad (65) und dem zweiten Antriebsrad (75) eine Kupplungsvorrichtung angeordnet ist,
**dadurch gekennzeichnet,**
**dass** die Kupplungsvorrichtung als Reibkupplung (8, 9) ausgebildet ist, die ein Reibelement (8) umfasst, welches mit dem einen der Antriebsräder (65) drehmomentschlüssig verbunden ist, und ein damit korrespondierendes Gegenreibelement (9), welches mit dem jeweils anderen Antriebsrad (75) drehmomentschlüssig verbunden ist, wobei die Reibkupplung (8, 9) ein vorgebbares Kupplungsmoment aufweist, bei dessen Überschreiten das erste Antriebsrad relativ (65) zum zweiten Antriebsrad (75) gleitend durchrutscht,
wobei zur Betätigung des ersten Stelltriebs (6) das erste Antriebsrad (65) und das zweite Antriebsrad (75) synchron angetrieben werden, so dass der zweite Stelltrieb (7) unbetätigt bleibt,
und zur Betätigung des zweiten Stelltriebs (7) das zweite Antriebsrad (75) angetrieben wird, und das erste Antriebsrad (65) relativ dazu stillgesetzt wird, so dass die Reibkupplung durchrutscht und der erste Stelltrieb (6) unbetätigt bleibt.

13. Verfahren nach Anspruch 12, **dadurch gekennzeichnet, dass** das erste Antriebsrad (65) und das zweite Antriebsrad (75) zur Erzeugung eines synchronen Antriebs durch die Reibkupplung drehmomentschlüssig gekuppelt werden.

14. Verfahren nach Anspruch 12 oder 13, **dadurch gekennzeichnet, dass** bei der Betätigung des ersten Stelltriebs (6) ein höheres Kupplungsmoment vorgegeben wird, als bei der Betätigung des zweiten Stelltriebs (7).

## Claims

1. Electromechanical brake device (1) for a motor vehicle, comprising an adjusting device (5) and a brake part (32) connected thereto, which can be adjusted along an axis (A) by the adjusting device (5) and can be brought into braking engagement with a counter-brake part (2),
wherein the actuating device (5) has a first actuating drive (6) and a second actuating drive (7) serially coupled thereto,
wherein the first actuating drive (6) has a rotatably drivable first drive wheel (65), and the second actuating drive (7) has a rotatably drivable second drive wheel (75) which is coaxial with the first drive wheel,
wherein a coupling device (8, 9) is arranged between the first drive wheel (65) and the second drive wheel (75),
**characterised in**
**in that** the clutch device is designed as a friction clutch (8, 9) with a friction element (8) which is connected in a torque-locking manner to one of the drive wheels (65) and which, in clutch engagement, can be connected in a friction-locking manner to a counter-friction element (9) which is connected in a torque-locking manner to the respective other drive wheel (75).

2. Brake device according to claim 1, **characterised in that** the friction clutch (8, 9) has a defined predeterminable clutch torque.

3. Brake device according to one of the preceding claims, **characterised in that** the friction element (8) and the counter-friction element (9) are arranged coaxially.

4. Brake device according to one of the preceding claims, **characterised in that** the friction element (8) and the counter-friction element (9) are conical.

5. Brake device according to one of the preceding claims, **characterised in that** the friction element (8) and the counter-friction element (9) are planar.

6. Brake device according to one of the preceding claims, **characterised in that** the friction element (8) and the counter-friction element (9) are pretensioned against each other.

7. Brake device according to claim 6, **characterised in that** the friction element (8) and/or the counter-friction element (9) is axially displaceable and is supported against the first drive wheel (65) or the second drive wheel (75) via an axially effective spring element (93).

8. Brake device according to claim 6 or 7, **characterised in that** the friction element (8) and/or the counter-friction element (9) is arranged in the first drive wheel (65) or the second drive wheel (75).

9. Brake device according to one of the preceding claims, **characterised in that** the friction element (8) and/or the counter-friction element (9) have a friction lining.

10. Brake device according to one of the preceding claims, **characterised in that** an actuating drive (7) has a spindle drive.

11. Brake device according to one of the preceding claims, **characterised in that** an actuating drive (6) has a wedge disc arrangement, ball ramp arrangement or a rocker pin arrangement.

12. Method for operating an electromechanical brake device which has an actuating device (5) comprising a first actuating drive (6) and a second actuating drive (7) coupled serially thereto, and which acts on a brake part (32) which can be brought into braking engagement with a counter-brake part (2) in the direction of an axis (A),
wherein the first actuating drive (6) has a first drive wheel (65) which can be driven in rotation and to which a first drive torque can be applied for actuation, and the second actuating drive (7) has a second drive wheel (75) which can be driven in rotation and is coaxial with the first drive wheel and to which a second drive torque can be applied for actuation, a clutch device being arranged
between the first drive wheel (65) and the second drive wheel (75),
**characterised in**
**in that** the clutch device is designed as a friction clutch (8, 9) which comprises a friction element (8) which is connected in a torque-locking manner to one of the drive wheels (65), and a corresponding counter-friction element (9) which is connected in a torque-locking manner to the respective other drive wheel (75), the friction clutch (8, 9) having a predeterminable clutch torque, above which the first drive wheel slips in a sliding manner relative (65) to the second drive wheel (75),
wherein the first drive wheel (65) and the second drive wheel (75) are driven synchronously to actuate the first actuating drive (6), so that the second actuating drive (7) remains unactuated,
and the second drive wheel (75) is driven to actuate the second actuating drive (7), and the first drive wheel (65) is brought to a standstill relative thereto, so that the friction clutch slips and the first actuating drive (6) remains unactuated.

13. Method according to claim 12, **characterised in that** the first drive wheel (65) and the second drive wheel (75) are coupled in a torque-locking manner by the friction clutch to generate a synchronous drive.

14. Method according to claim 12 or 13, **characterised in that** a higher clutch torque is specified when the first actuating drive (6) is actuated than when the second actuating drive (7) is actuated.

## Revendications

1. Dispositif de freinage électromécanique (1) pour un véhicule automobile, comprenant un dispositif de réglage (5) et un élément de freinage (32) relié à celui-ci, qui peut être déplacé par le dispositif de réglage (5) le long d'un axe (A) et qui peut être amené en engagement de freinage avec un élément de freinage opposé (2),
le dispositif de réglage (5) présentant un premier mécanisme de réglage (6) et un deuxième mécanisme de réglage (7) couplé en série avec celui-ci,
le premier actionneur (6) présentant une première roue d'entraînement (65) pouvant être entraînée en rotation, et le deuxième actionneur (7) présentant une deuxième roue d'entraînement (75) pouvant être entraînée en rotation et coaxiale à la première roue d'entraînement
, un dispositif d'accouplement (8, 9) étant disposé entre la première roue d'entraînement (65) et la deuxième roue d'entraînement (75),
**caractérisé en ce que**
**en ce que** le dispositif d'accouplement est réalisé sous la forme d'un accouplement à friction (8, 9) avec un élément de friction (8) qui est relié à l'une des roues motrices (65) par une liaison à couple et qui, en prise d'accouplement, peut être relié par friction à un contre-élément de friction (9) qui est relié à l'autre roue motrice respective (75) par une liaison à couple.

2. Dispositif de freinage selon la revendication 1, **caractérisé en ce que** l'embrayage à friction (8, 9) présente un couple d'embrayage pouvant être prédéfini de manière définie.

3. Dispositif de freinage selon l'une des revendications précédentes, **caractérisé en ce que** l'élément de friction (8) et l'élément de friction opposé (9) sont disposés coaxialement.

4. Dispositif de freinage selon l'une des revendications précédentes, **caractérisé en ce que** l'élément de friction (8) et l'élément de contre-frottement (9) sont de forme conique.

5. Dispositif de freinage selon l'une des revendications précédentes, **caractérisé en ce que** l'élément de friction (8) et l'élément de contre-frottement (9) sont de forme plane.

6. Dispositif de freinage selon l'une des revendications précédentes, **caractérisé en ce que** l'élément de friction (8) et l'élément de friction opposé (9) sont précontraints l'un par rapport à l'autre.

7. Dispositif de freinage selon la revendication 6, **caractérisé en ce que** l'élément de friction (8) et/ou l'élément de friction opposé (9) peut être déplacé axialement et est soutenu contre la première roue motrice (65) ou la deuxième roue motrice (75) par un élément de ressort (93) à action axiale.

8. Dispositif de freinage selon la revendication 6 ou 7, **caractérisé en ce que** l'élément de friction (8) et/ou l'élément de friction opposé (9) est disposé dans la première roue motrice (65) ou dans la deuxième roue motrice (75).

9. Dispositif de freinage selon l'une des revendications précédentes, **caractérisé en ce que** l'élément de friction (8) et/ou l'élément de friction opposé (9) présentent une garniture de friction.

10. Dispositif de freinage selon l'une des revendications précédentes, **caractérisé en ce qu'**un actionneur (7) comporte un entraînement à broche.

11. Dispositif de freinage selon l'une quelconque des revendications précédentes, **caractérisé en ce qu'**un actionneur (6) comprend un agencement de cales, un agencement de rampes à billes ou un agencement de goupilles de basculement.

12. Procédé de fonctionnement d'un dispositif de freinage électromécanique qui présente un dispositif de réglage (5) comprenant un premier actionneur (6) et un deuxième actionneur (7) couplé en série avec celui-ci, et qui agit sur un élément de freinage (32) qui peut être amené en engagement de freinage avec un élément de freinage antagoniste (2) dans la direction d'un axe (A),
le premier actionneur (6) présentant une première roue d'entraînement (65) pouvant être entraînée en rotation, sur laquelle un premier couple d'entraînement peut être appliqué pour l'actionnement, et le deuxième actionneur (7) présente une deuxième roue d'entraînement (75) pouvant être entraînée en rotation, coaxiale à la première roue d'entraînement, sur laquelle un deuxième couple d'entraînement peut être appliqué pour l'actionnement, un dispositif d'accouplement étant disposé
entre la première roue d'entraînement (65) et la deuxième roue d'entraînement (75), **caractérisé en ce que**
**en ce que** le dispositif d'embrayage est réalisé sous la forme d'un embrayage à friction (8, 9) qui comprend un élément de friction (8) qui est relié à l'une des roues d'entraînement (65) par une liaison à couple et un élément de friction antagoniste (9) correspondant qui est relié à l'autre roue d'entraînement respective (75) par une liaison à couple, l'embrayage à friction (8, 9) présentant un couple d'embrayage pouvant être prédéterminé, lors du dépassement duquel la première roue d'entraînement glisse par rapport (65) à la deuxième roue d'entraînement (75),
la première roue d'entraînement (65) et la deuxième roue d'entraînement (75) étant entraînées de manière synchrone pour l'actionnement du premier actionneur (6), de sorte que le deuxième actionneur (7) reste non actionné,
et pour actionner le deuxième actionneur (7), la deuxième roue d'entraînement (75) est entraînée et la première roue d'entraînement (65) est immobilisée par rapport à celle-ci, de sorte que l'embrayage à friction patine et que le premier actionneur (6) reste non actionné.

13. Procédé selon la revendication 12, **caractérisé en ce que** la première roue d'entraînement (65) et la deuxième roue d'entraînement (75) sont couplées en couple par l'accouplement à friction pour générer un entraînement synchrone.

14. Procédé selon la revendication 12 ou 13, **caractérisé en ce que**, lors de l'actionnement du premier actionneur (6), un couple d'accouplement plus élevé est prédéfini que lors de l'actionnement du deuxième actionneur (7).
